# EUROPÄISCHE PATENTSCHRIFT

(11) **EP 1 004 357 B1**
(45) Veröffentlichungstag und Bekanntmachung des Hinweises auf die Patenterteilung: **03.01.2007**
(21) Anmeldenummer: 99122080.7
(22) Anmeldetag: 16.11.1999
(51) Int. Cl.: B01J 23/38, B01J 23/70, B01J 37/02, B01J 37/08, B01J 21/06, C07B 31/00

(54) **Trägerkatalysator und dessen Einsatz in der Hydrierung**
Supported catalyst and its use in hydrogenation
Catalyseur supporté et son utilisation dans l'hydrogénation

(30) Priorität: 26.11.1998 DE 19854635
(43) Veröffentlichungstag der Anmeldung: 31.05.2000
(73) Patentinhaber: BASF Aktiengesellschaft, 67056 Ludwigshafen (DE)
(72) Erfinder: Meyer, Gerald, Dr., 67067 Ludwigshafen (DE); Schwab, Ekkehard, Dr., 67434 Neustadt (DE); Landes, Helmut, 80339 München (DE); Knözinger, Helmut, Prof. Dr., 81679 München (DE)
(74) Vertreter: Isenbruck, Günter

(56) Entgegenhaltungen:
- EP-A- 0 432 534
- EP-A- 0 533 451
- GB-A- 2 234 450
- US-A- 4 686 314
- ALEKSEEV O S ET AL: "Effects of the interaction of dispersed metal particles with the support in catalysts prepared using organometallic compounds. V. Influence of group IVB ions on adsorption and catalytic properties of Pd/SiO2" APPLIED CATALYSIS, Bd. 63, Nr. 1, 1. August 1990 (1990-08-01), Seiten 37-50, XP000909052

## Beschreibung

Die Erfindung betrifft Trägerkatalysatoren, aufgebaut aus modifizierten Trägern und einer aktiven Komponente, deren Herstellung und deren Verwendung beim Einsatz in der Hydrierung ungesättigter Verbindungen.

Trägerkatalysatoren, insbesondere getragene Oxide, spielen in der Katalyse eine wichtige Rolle. Eine Untersuchung von adsorbiertem O₂ ergibt, daß getragene Oxide auf diamagnetischen Trägermaterialien teilweise weniger elektronenreiche Sauerstoffspezies wie O₂⁻ und O⁻ anreichern, weil ihre Oberfläche nur eine geringe Dichte an elektronenliefernden Zentren aufweist. Da eine selektive Oxidation organischer Moleküle es erfordert, daß nur eine begrenzte Menge an aktivem O₂ zur Verfügung gestellt wird, finden hier zahlreiche gemischte und getragene Oxide Anwendung. Da ihre Oberflächen außerdem verschiedenartige Adsorptionsplätze aufweisen, läßt die Modifizierung von Trägem durch Aufbringung weiterer Komponenten (im folgenden Modifikatoren genannt) eine Beeinflussung von Aktivität und Selektivität der Katalysatoren in weiten Bandbreiten zu.

Die Trägermaterialien können Wechselwirkungen mit dem aktiven Metall eingehen. Solche durch hohe Reduktionstemperaturen (über 700 K) hervorgerufenen Wechselwirkungen, die Metalle mit reduzierbaren Oxiden eingehen, werden im allgemeinen als starke Metall-Träger-Wechselwirkungen (SMSI) bezeichnet. Eine Beschreibung des SMSI-Zustandes geht davon aus, daß bei hohen Reduktionstemperaturen Ionen des Trägeroxids auf die Oberfläche des reduzierten Metalls wandern. Durch solche Modifikatoren kann die Aktivität des Katalysators in verschiedenen Reaktionen erhöht werden. Die erhöhte Aktivität wird im allgemeinen dadurch begründet, daß die Dispersion der aktiven Komponente hoch ist. Die Katalysatoren zeichnen sich weiterhin durch eine hohe Sinter- und Agglomerationsstabilität aus.

Carturan, G. Chim. Int. (Milan) 65 (1983) 688 beschreibt die Hydrierung von mehrfach ungesättigten C₁₈-Fettsäuren mit Palladiumkatalysatoren. Einer der eingesetzten Katalysatoren ist aus einem Träger aus Glasperlen, die mit TiO₂ beschichtet sind, aufgebaut. Das TiO₂ wird aus einer ethanolischen Ti(OEt)₄-Lösung und anschließendes Erhitzen auf 400°C aufgebracht. Die Modifizierung des Trägermaterials wird hier durchgeführt, indem der Formkörper, die Glasperlen, mit einer Precursorverbindung des Modifikators vorbehandelt wird.

In Ryndin et al., Applied Catalysis, 63 (1990) 37 bis 50 wird eine Untersuchung des Einflusses von Gruppe-IVB-Ionen auf die Adsorption und die katalytischen Eigenschaften wie Dispersion des aktiven Metalls des Systems Pd/SiO₂ beschrieben. Das Katalysatorsystem wird aus dehydratisiertem SiO₂ und Tetrabenzyltitan bzw. -zirkon, -hafnium und anschließende Adsorption von Allylpalladiumcyclopentadienyl hergestellt. Bei der Herstellung wird jeglicher Luftkontakt ausgeschlossen. Mit dem Katalysator wird die Synthese von MeOH aus CO und H₂ und die Hydrierung von Benzol untersucht.

EP-A 0 225 953 offenbart Katalysatoren aus einem Metallalkoxid-modifizierten Träger und einem katalytisch aktiven Metall der 8. Nebengruppe des Periodensystems der Elemente. In den Beispielen wird als Trägermaterial ausschließlich γ-Al₂O₃ eingesetzt, das mit einem Metallalkoxid modifiziert wurde. Die Aufbringung der katalytisch aktiven Metalle erfolgt dabei ausschließlich durch Imprägnierung mit einer Lösung ihrer Chloride oder Nitrate. Die Katalysatoren weisen bei der Disproportionierung von Alkenen, in einem Gasphasenverfahren zur Herstellung von α-substituierten Acrylatestern oder Methylmethacrylaten, in Verfahren zur selektiven Hydrierung von Kohlenwasserstoffen mit mindestens einer Alken- und einer Alkin-Einheit, wobei das Alkin hydriert wird, ohne Hydrierung des Alkens und in einem Verfahren zur Herstellung von Methan aus CO und H₂, eine erhöhte Aktivität auf.

In K. Matsuo et al. Appl. Surf, Seiten 33, 34 (1998), 269-276 werden Katalysatoren beschrieben, die einen titanbeschichteten Siliciumoxidträger aufweisen, der als aktive Komponente Metalle aus der Pt-Gruppe enthält. Der Ti/SiO₂-Träger kann durch verschiedene Verfahren hergestellt werden:
a) Gasphasenhydrierung von Titanalkoxiden und Adsorption auf SiO₂;
b) Pyrolyse von Titanalkoxiden und Adsorption auf SiO₂;
c) Adsorption von Titan-Kolloiden auf SiO₂.

Diese Träger werden mit Metallen der Pt-Gruppe, im Falle von Palladium mit PdCl₂, imprägniert. Die Metall-Träger-Wechselwirkungen (SMSI) werden in der vollständigen Oxidation von Aceton untersucht. Dabei wurde festgestellt, daß nur der Katalysator, hergestellt nach dem Verfahren a), aktiv ist. Hieran wird deutlich, daß die Eigenschaften und die katalytische Aktivität der modifizierten Trägerkatalysatoren durch ihr Herstellungsverfahren beeinflußt werden.

Die Aufgabe der vorliegenden Erfindung ist es, einen Katalysator und ein Verfahren zur Herstellung dieses Katalysators bereitzustellen, der sich durch eine hohe Dispersion der aktiven Komponente und eine hohe Sinter- und Agglomerationsstabilität auszeichnet und der, insbesondere für den Einsatz zur Hydrierung ungesättigter Verbindungen, den im Stand der Technik beschriebenen Katalysatoren überlegen ist.

Diese Aufgabe wird durch einen Trägerkatalysator gelöst, enthaltend ein katalytisch aktives Metall und einen durch Aufbringung von Modifikatoren auf ein inneres Trägermaterial modifizierten Träger. Der erfindungsgemäße Katalysator ist dann dadurch gekennzeichnet, daß das katalytisch aktive Metall in Form seiner chloridfreien gelösten Aminkomplexe, Acetylacetonat- oder Allylkomplexe auf den modifizierten Träger aufgebracht wird.

Die erfindungsgemäßen Trägerkatalysatoren weisen eine besonders hohe und stabile Dispersion des katalytisch aktiven Metalls auf Durch die Vermeidung einer Verwendung von Chloridionen werden negative Auswirkungen der Chloridionen auf die Dispersion und die Aktivität des katalytisch aktiven Metalls ausgeschlossen.

Unter Modifikatoren sind dabei Komponenten zu verstehen, die auf Träger aufgebracht werden und eine Beeinflussung der Aktivität und Selektivität des Katalysators bewirken.

Unter innerem Trägermaterial ist die noch zu modifizierende Trägerkomponente zu verstehen. Der Träger setzt sich zusammen aus innerem Trägermaterial und Modifikator.

Vorzugsweise wird das innere Trägermaterial vor der Aufbringung der Modifikatoren thermisch vorbehandelt. Der Modifizierung des inneren Trägermaterials mit dem Modifikator liegt die Vorstellung zugrunde, daß eine dem inneren Trägermaterial im Überschuß zugegebene hydrolyseempfindliche Modifikatorverbindung (der Modifikatorprecursor) mit den Oberflächenhydroxylgruppen des inneren Trägermaterials reagiert. Die Zahl der dafür zur Verfügung stehenden Oberflächengruppen läßt sich, gemäß E. F. Vansant, P. Van der Voort und K. C. Vrancken" Studies in Surface Science and Catalysis", Vol. 93, Kapitel 4, Seiten 79 bis 88, Editoren: B. Delmon und J. T. Yates, Elsevier, 1995 und Ralph K. Iler "The Chemistry of Silica", Seiten 624 bis 637, John Wiley & Sons, 1979, am Beispiel des SiO₂, durch thermische Vorbehandlung des inneren Trägermaterials steuern. Die thermische Vorbehandlung des inneren Trägermaterials hat demnach einen entscheidenden Einfluß auf die Eigenschaften des Katalysators.

Als inneres Trägermaterial wird dabei SiO₂, eingesetzt.

Das Trägermaterial kann dabei in beliebiger Form vorliegen. Bevorzugt sind Pulver, Splitt, Stränge, Kugeln, Tabletten oder Ringe.

Als Modifikatorprecursor werden Verbindungen, des Ti, Zr, Nb, Ta als Modifikator eingesetzt.

Die späteren Modifikatoren werden in Form (der Precursor-Form) ihrer Alkoholate, Halogenide, Oxalate oder Carboxylate aufgebracht. Bevorzugt werden sie in Form ihrer Alkoholate aufgebracht. Diese sollten hydrolyseempfindlich sein, so daß sie in ihre Oxide umgewandelt werden können. Verbindungen aus der Reihe Titantetraisopropylat, Titantetrachlorid, Zirkoniumbromid, Zirkoniumisopropoxid, Niobium-(V)-ethoxid, Niobium-(V)-isopropoxid, Nioboxalat, Niobammoniumoxalat, Tantalchlorid und Tantalethoxid werden besonders bevorzugt eingesetzt. Ganz besonders bevorzugt werden Titantetraisopropylat und Niobium-(V)-isopropoxid eingesetzt.

Die Modifikatoren gehen Wechselwirkungen mit einem auf dem Katalysatorträger aufgebrachten katalytisch aktiven Metall ein. Dadurch werden Katalysatoren mit einer verstärkten Aktivität erhalten, da die Dispersion der aktiven Spezies gegenüber Katalysatoren ohne Modifikatoren erhöht ist. Desweiteren weisen solche modifizierten Trägerkatalysatoren eine bessere Alterungsbeständigkeit aufgrund einer erhöhten Agglomerations- und Sinterbeständigkeit auf.

Als katalytisch aktive Metalle wird Pd und/oder Pt eingesetzt, wobei Pd ganz besonders bevorzugt ist.

Pd wird in Form von [Pd(NH₃)₄](NO₃)₂ und Pt wird in Form von [Pt(NH₃)₄](NO₃)₂ aufgebracht.

Die Verteilung des katalytisch aktiven Metalls über den Formkörper ist beliebig. Bevorzugt liegt das katalytisch aktive Metall als Profil (Schale) von bis 2 mm Dicke, besonders bevorzugt von bis zu 1 mm Dicke vor.

Ein weiterer Gegenstand der vorliegenden Erfindung ist ein Verfahren zur Herstellung eines erfindungsgemäßen Katalysators, das die folgenden Schritte umfaßt:
a) thermische Vorbehandlung des inneren Trägermaterials,
b) Imprägnierung des thermisch vorbehandelten inneren Trägermaterials mit einem Modifikator in der Gas- oder Flüssigphase,
c) gegebenenfalls Hydrolyse des modifizierten Trägermaterials zwischen 20 und 200°C in einem H₂O-haltigen Gasstrom,
d) gegebenenfalls Trocknung zwischen 100 und 500°C,
e) gegebenenfalls Kalzinierung zwischen 200 und 1000°C,
f) Aufbringen des katalytisch aktiven Metalls durch Imprägnierung oder Ionenaustausch,
g) Trocknung zwischen 20 und 500°C,
h) gegebenenfalls Kalzinierung bei bis zu 1000 °C.

Durch die thermische Vorbehandlung des inneren Trägermaterials (Trägeroxid) läßt sich die Zahl der zur Verfügung stehenden Oberflächenhydroxylgruppen steuern. Diese reagieren mit dem Modifikatorprecursor. Die thermische Vorbehandlung kann an Luft oder im Stickstoffstrom bei Temperaturen von im allgemeinen 200 bis 1200°C, bevorzugt von 400 bis 800°C durchgeführt werden. Beispielsweise wird das innere Trägermaterial im Falle von SiO₂-Splitt vor der Beladung mit dem Modifikatorprecursor bei 720 bis 870 K für 6 bis 8 Stunden vorbehandelt.

Zur Aufbringung des Modifikatorprecursors auf das innere Trägermaterial lassen sich im wesentlichen zwei Wege unterscheiden. Dies sind zum einen Methoden der gemeinsamen Fällung und Kristallisation der verschiedenen Komponenten (Weg 1), oftmals über die Bildung eines Gels als Zwischenprodukt. Das Ergebnis sind Materialien, die im Volumen eine Zusammensetzung aufweisen, die der der Oberfläche sehr ähnlich ist. Im Gegensatz dazu lassen sich auch auf die Oberfläche vorhandener Trägermaterialien Substanzen aufbringen (Weg 2), indem zum Beispiel Adsorptionseigenschaften, Ionenaustauschfähigkeit oder die Möglichkeit der Ausbildung von chemischen Bindungen zwischen dem Trägermaterial und der aufgebrachten Komponente ausgenutzt werden. Das Zermahlen fester Reinstoffe und anschließende thermische Behandlung, die zum Teil Festkörperreaktionen zwischen den Komponenten ermöglichen, lassen sich als Übergänge zwischen den beiden prinzipiell verschiedenen Verfahren auffassen.

Vorzugsweise wird der zweite Weg in dem erfindungsgemäßen Verfahren zur Herstellung der erfindungsgemäßen Trägerkatalysatoren eingesetzt. Dazu wird eine Imprägnierung des inneren Trägermaterials in der Flüssigphase in einem geeigneten Lösungsmittel oder in der Gasphase durchgeführt.

Die Imprägnierung in der Gasphase kann beispielsweise durch Chemical Vapor Deposition (CVD) erfolgen. Ein geeigneter Modifikatorprecursor ist zum Beispiel TiCl₄, das aus der Gasphase mit Oxidoberflächen zur Reaktion gebracht werden kann.

Eine Imprägnierung in der Flüssigphase kann aus wässriger oder organischer Phase, in Abhängigkeit von den eingesetzten Modifikatorprecursorn, erfolgen. Die bevorzugt eingesetzen Metallalkoxid-modifizierten Träger werden durch Imprägnierung des gewünschten inneren Trägermaterials mit einer Lösung eines Alkoxidprecursors des gewünschten Metalloxids hergestellt. Die zur Imprägnierung verwendete Lösung ist dabei bevorzugt organisch. Die einzige Bedingung ist, daß eine adäquate Menge des Modifikatorprecursors des ausgewählten Metalloxids in dem Lösungsmittel löslich ist. Dabei ist unter einer adäquaten Menge im allgemeinen 1 mol Modifikatormetall auf 0,1 bis 100 kg inneres Trägermaterial, bevorzugt auf 1 bis 50 kg inneres Trägermaterial, besonders bevorzugt auf 5 bis 25 kg inneres Trägermaterial zu verstehen. Üblicherweise werden Kohlenwasserstoffe oder alkoholische Lösungsmittel, bevorzugt Tetrahydrofuran, eingesetzt.

Das modifizierte Trägermaterial wird gegebenenfalls zwischen 20 und 200°C bevorzugt zwischen 20 und 100°C in einem H₂O-haltigen Gasstrom hydrolysiert. Dieser ist beispielsweise ein H₂O-haltiges Inertgas wie N₂ oder Ar oder H₂O-haltige Luft oder H₂O-haltiger Sauerstoff. Anschließend wird gegebenenfalls zwischen 80 und 500°C, bevorzugt zwischen 100 und 200°C getrocknet, sowie gegebenenfalls zwischen 200 und 1000°C, bevorzugt zwischen 400 und 800°C kalziniert. Vorzugsweise entfällt der Kalzinierungsschritt.

Der so erhaltene Modifikatoroxid-Anteil, bezogen auf das innere Trägermaterial, beträgt im allgemeinen zwischen 0,1 und 10 Gew.-%, bevorzugt zwischen 0,5 und 5 Gew.-%, besonders bevorzugt zwischen 1 und 3 Gew.-%. In den Fällen der Nichthydrolyse bzw. Nichttrocknung bzw. Nichtkalzinierung kann der Modifikatorprecursor auch bereits das gewünschte Zielprodukt der ersten Stufe sein.

Das Aufbringen des katalytisch aktiven Metalls kann durch in der Literatur bekannte Verfahren, vorzugsweise durch Tränken mit den Aktivkomponenten in der Flüssigphase, d. h. vorzugsweise durch Imprägnier- oder Ionenaustauschverfahren, erfolgen. Einen Überblick über die Anwendung der beiden Methoden geben Doorling et al. (T. A. Doorling, B. W. Lynch, L. Moss, J. Catal. 20 (1971), 190) am Beispiel des Systems Pt/SiO₂. Wichtige Parameter bei der Aufbringung der Edelmetalle (Aktivkomponente), die die spätere Dispersion der Aktivkomponente beeinflussen, sind der pH-Wert der wässrigen Imprägnierlösungen und die Natur des Precursors der Aktivkomponente. Enthaltene schwefelhaltige Ionen können ebenfalls Auswirkungen auf die Dispersion des Metalls haben. In Abhängigkeit von der eingesetzten Precursorverbindung des katalytisch aktiven Metalls (Aktivkomponente) kann die Tränkung in wässriger oder organischer Lösung durchgeführt werden. Wird als katalytisch aktives Metall das in den erfindungsgemäßen Katalysatoren besonders bevorzugte Palladium eingesetzt, so werden im Ionenaustauschverfahren Pd(NH₃)₄(NO₃)₂ in ammoniakalischer, wässriger Lösung verwendet, im Imprägnierverfahren vorzugsweise Diallylpalladium oder Palladiumacetylacetonat in organischer Lösung. Als organisches Lösungsmittel werden dabei vorzugsweise Alkohole oder THF eingesetzt. Besonders bevorzugt werden chloridfreie Palladium-Precursorverbindungen eingesetzt.

Im Anschluß an die Tränkung wird der erhaltene Trägerkatalysator zwischen 20 und 500°C, bevorzugt zwischen 50 und 300°C, besonders bevorzugt zwischen 100 und 250°C getrocknet und gegebenenfalls bei bis zu 1000°C kalziniert. Vorzugsweise entfällt der Kalzinierungsschritt.

Die so hergestellten erfindungsgemäßen Trägerkatalysatoren enthalten im allgemeinen 0,01 bis 1,5 Gew.-% Pd bevorzugt 0,1 bis 1,4 Gew.-% Pd, bezogen auf die Gesamtmasse des Trägerkatalysators.

Die Dispersion des Pd, gemessen nach einem Verfahren gemäß Th. Mang, Präparation, Charakterisierung und Aktivität von Palladiumkatalysatoren mit Konzentrationsprofil, Dissertation, München, 1996, durch Pulschemisorption von CO im Wasserstoffstrom, ist abhängig von der Aufbringung des katalytisch aktiven Metalls (Imprägnierung/Ionenaustauschverfahren) und der eingesetzten Precursorverbindung. Die Pd-Dispersion (angegeben in %) auf einem modifizierten Träger ist dabei üblicherweise höher als die auf einem nicht-modifizierten Träger, wie die folgenden Beispiele am System SiO₂-TiO₂/SiO₂ zeigen. Für die durch Ionenaustausch-Präparation oder Imprägnierung von TiO₂ modifizierten SiO₂-Trägern mit Pd(NH₃)₄(NO₃)₂-Lösungen hergestellten Katalysatoren können Pd-Dispersionen von > 50 % erreicht werden.

Eine erhöhte Dispersion des katalytisch aktiven Metalls auf modifizierten Trägem gegenüber nicht-modifizierten Trägern bleibt auch nach mehreren Redoxzyklen erhalten, wodurch deutlich wird, daß die Stabilität der katalytisch aktiven Metallpartikel durch die Modifizierung des Trägers erhöht wird.

Ein weiterer Gegenstand der vorliegenden Erfindung ist die Verwendung des erfindungsgemäßen Katalysators in einem Verfahren zur Hydrierung ungesättigter Verbindungen, sowie ein Verfahren zur Hydrierung ungesättigter Verbindungen, in dem ein Katalysator gemäß der vorliegenden Erfindung eingesetzt wird.

In einem solchen Verfahren können als ungesättigte Verbindungen beispielsweise Acetylene, Diene, Olefine, aromatische Systeme, Aldehyde, Ketone, zum Beispiel α,β-ungesättigte Aldehyde und Ketone, und weitere funktionelle Gruppen tragende Verbindungen sowie deren Kombinationen eingesetzt werden. Des weiteren kann der erfindungsgemäße Katalysator in einem Verfahren zur Entfernung von O₂ oder H₂ eingesetzt werden.

Die Hydrierung kann dabei in der Gasphase, in der Flüssigphase oder in einer gemischten Gas-/Flüssigphase durchgeführt werden. Das Verfahren kann dabei kontinuierlich oder diskontinuierlich durchgeführt werden.

Die Durchführung des Verfahrens erfolgt gemäß in der Literatur bekannten Verfahren zur Hydrierung ungesättigter Verbindungen mit Trägerkatalysatoren. Übersichten über die technische Durchführung der Hydrierung ungesättigter Verbindungen sind in "Studies in Surface Science and Catalysis", Vol. 27, Editor: L. 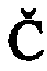 ervený, Chapter 18 from M.L. Derrien, p. 613 bis 665 und "Ullman's Encyclopedia of Industrial Chemistry", Editors: B. Elvers, S. Hawkins, M. Ravenscroft and G. Schulz, 5^{th} editon, Vol. A 13, p. 487 bis 497, gegeben.

Das Verfahren wird im allgemeinen in einem Druckbereich von 0 bis 300 bar, bevorzugt von 0 bis 100 bar, besonders bevorzugt von 0 bis 50 bar und in einem Temperaturbereich von 0 bis 400°C, bevorzugt von 0 bis 200°C, besonders bevorzugt von 0 bis 150°C durchgeführt.

Die nachfolgenden Beispiele erläutern die Erfindung zusätzlich.

### Beispiele

### 1. Katalysatorpräparation

### Herstellung von SiO₂ Splitt (Katalysator A)

Natriumsilikat-Lösung wurde mit NH₃-Wasser versetzt und anschließend mit H₂SO₄ gefällt. Das ausgefällte SiO₂ wurde danach in einer Filterpresse isoliert und mit Wasser natriumfrei gewaschen. Anschließend wurde der Filterkuchen angemaischt und bei 105 bis 150°C im Sprühturm versprüht. Das erhaltene Produkt wurde nun in einem Mix-Muller gekollert und zu 4 mm Strängen extrudiert. Diese wurden dann bei 120°C getrocknet und bei 800°C kalziniert. Die kalzinierten Stränge wurde zuletzt zu Splitt gemahlen und eine Fraktion zwischen 250 und 500 µm ausgesiebt. Die BET-Oberfläche betrug 193m²/g.

### 1.1 Modifizierung von SiO₂

### 1.1.1 Belegung mit TiCl₄ in der Gasphase (Katalysator B)

SiO₂-Splitt (Katalysator A) wurde 6 Stunden im Stickstoffstrom (ca. 250 ml/min) bei 720 K ausgeheizt. Nach Abkühlen des SiO₂ auf 450 K wurde der Stickstoffstrom durch eine mit TiCl₄ gefüllte Waschflasche geleitet, bevor er den mit SiO₂ gefüllten Reaktor durchlief. Um eine vollständige Reaktion der Edukte zu gewährleisten, wurde so 90 min TiCl₄ durch das Oxid geführt. Anschließend wurde bei gleicher Temperatur 30 min mit trockenem Stickstoff gespült. In einem weiteren Schritt wurde ebenfalls bei 450 K 120 min wasserdampfgesättigter Stickstoff zur Hydrolyse der verbleibenden TiCl₄-Einheiten durch die Probe geleitet. Daran schloß sich eine Trocknung für 5 Stunden bei 470 K und eine Kalzinierung für 5 Stunden bei 870 K an. Es wurde ein TiO₂-Anteil von 2,2 Gew.-% erhalten.

### 1.1.2 Belegung mit Ti(OⁱPr)₄ (Katalysator C)

SiO₂-Splitt (Katalysator A) wurde zunächst 8 Stunden bei 870 K an Luft vorbehandelt. Daran anschließend wurden 12g der Probe im Vakuum bei 870 K ausgeheizt. Zu dem abgekühlten Material wurden unter Stickstoffatmosphäre 50 ml THF und 1,2 ml Ti(OⁱPr)₄ gegeben. Die Suspension wurde 30 min bei Raumtemperatur gerührt, anschließend wurde das Oxid abfiltriert. Zum Waschen wurde das Oxid zweimal in 40 ml THF suspendiert und erneut abfiltriert. Der Träger wurde zunächst bei Raumtemperatur an Luft hydrolysiert, anschließend 2 Stunden bei 470 K und 5 Stunden bei 870 K kalziniert. Der so erhaltene TiO₂-Anteil betrug 2,2 Gew.-%.

### 1.2 Belegung von SiO₂ und TiO₂/SiO₂ mit Palladium mit Pd(NH₃)₄(NO₃)₂

Die Belegung der untersuchten Träger mit Palladium als aktiver Komponente erfolgte nach unterschiedlichen Verfahren, um Auswirkungen der Trägermodifizierung herauszuarbeiten. Es wurden nur chloridfreie Palladiumverbindungen eingesetzt.

### 1.2.1 Ionenaustausch auf SiO₂ mit Pd(NH₃)₄(NO₃)₂ bei pH ≈ 9 (Katalysator D)

10 g SiO₂-Splitt (Katalysator A) wurden über Nacht in 100 ml 0,01 M NH₄NO₃-Lösung suspendiert. Am nächsten Tag wurden 100 ml Ammoniaklösung (≈ 0,05 Gew.-%) zugegeben. Nach Stabilisierung des pH-Wertes wurden 100 ml 0,03 M Pd(NH₃)₄(NO₃)₂-Lösung zugegeben. Die Pd(NH₃)₄(NO₃)₂-Lösung enthielt außerdem 0,01 M an NH₄NO₃. Nach ca. 30 min Rühren wurde der Feststoff abfiltriert und zweimal mit 0,01 M NH₄NO₃-Lösung gewaschen, die zuvor auf den End-pH-Wert der Suspension eingestellt worden war. Die Träger wurden bei Raumtemperatur und Normaldruck im Exsikkator getrocknet. Vor den weiteren Untersuchungen wurde der Katalysator weiterhin 2 Stunden bei 390 K an Luft getrocknet. Der Palladiumgehalt betrug 1,3 Gew.-%.

### 1.2.2 Ionenaustausch auf SiO₂ mit Pd(NH₃)₄(NO₃)₂ bei pH ≈ 9 (Katalysator E)

10 g SiO₂-Splitt (Katalysator A) wurden über Nacht in 165 ml 0,01 M NH₄NO₃-Lösung suspendiert. Am nächsten Tag wurden 100 ml Ammoniaklösung (≈ 0,05 Gew.-%) zugegeben. Nach Stabilisierung des pH-Wertes wurden 35 ml 0.03 M Pd(NH₃)₄(NO₃)₂-Lösung zugegeben. Die Pd(NH₃)₄(NO₃)₂-Lösung enthielt außerdem 0,01 M NH₄NO₃. Nach ca. 30 min Rühren wurde der Feststoff abfiltriert und zweimal mit 0,01 M NH₄NO₃-Lösung gewaschen, die zuvor auf den End-pH-Wert der Suspension eingestellt worden war. Die Träger wurden bei Raumtemperatur und Normaldruck im Exsikkator getrocknet. Vor den weiteren Untersuchungen wurde der Katalysator weiterhin 2 Stunden bei 390 K an Luft getrocknet. Der Palladiumgehalt betrug 0,83 Gew.-%.

### 1.2.3 Ionenaustausch auf TiO₂/SiO₂ mit Pd(NH₃)₄(NO₃)₂ bei pH ≈ 9 (Katalysator F)

10 g TiO₂-modifizierter SiO₂-Splitt (Katalysator C) wurden über Nacht in 100 ml 0,01 M NH₄-NO₃-Lösung suspendiert. Am nächsten Tag wurden 100 ml Ammoniaklösung (≈ 0,05 Gew.-%) zugegeben. Nach Stabilisierung des pH-Wertes wurden 100 ml 0,03 M Pd(NH₃)₄(NO₃)₂-Lösung zugegeben. Die Pd(NH₃)₄(NO₃)₂-Lösung enthielt außerdem 0,01 M NH₄NO₃. Nach ca. 30 min Rühren wurde der Feststoff abfiltriert und zweimal mit 0,01 M NH₄NO₃-Lösung gewaschen, die zuvor auf den End-pH-Wert der Suspension eingestellt worden war. Die Träger wurden bei Raumtemperatur und Normaldruck im Exsikkator getrocknet. Vor den weiteren Untersuchungen wurde der Katalysator weiterhin 2 Stunden bei 390 K an Luft getrocknet. Der Pd-Gehalt betrug 1,4 Gew.-%.

### 1.2.4 Ionenaustausch auf TiO₂/SiO₂ mit Pd(NH₃)₄(NO₃)₂ bei pH ≈ 9 (Katalysator G)

10 g TiO₂-modifizierter SiO₂-Splitt (Katalysator C) wurden über Nacht in 165 ml 0,01 M NH₄NO₃-Lösung suspendiert. Am nächsten Tag wurden 100 ml Ammoniaklösung (≈ 0,05 Gew.-%) zugegeben. Nach Stabilisierung des pH-Wertes wurden 35 ml 0,03 M Pd(NH₃)₄(NO₃)₂-Lösung zugegeben. Die Pd(NH₃)₄(NO₃)₂-Lösung enthielt außerdem 0,01 M NH₄NO₃. Nach ca. 30 min Rühren wurde der Feststoff abfiltriert und zweimal mit 0,01 M NH₄NO₃-Lösung gewaschen, die zuvor auf den End-pH-Wert der Suspension eingestellt worden war. Die Träger wurden bei Raumtemperatur und Normaldruck im Exsikkator getrocknet. Vor den weiteren Untersuchungen wurde der Katalysator weiterhin 2 Stunden bei 390 K an Luft getrocknet. Der Palladiumgehalt betrug 0,90 Gew.-%.

### 1.2.5 Imprägnierung von SiO₂ mit Pd(NH₃)₄(NO₃)₂ bei pH ≈ 9 (Katalysator H)

4 g SiO₂-Splitt (Katalysator A) wurden 1 Stunde bei 720 K vorbehandelt. Anschließend wurde eine Lösung aus 1,07 ml Pd(NH₃)₄(NO₃)₂-Lösung (4,87% Pd) und 2,93 ml NH₃-Lösung 0,5 Gew.-% in Portionen von jeweils 1 ml zugegeben und zwischendurch das Pulver durchgerührt. Über Nacht wurden die Proben verschlossen und anschließend mehrere Tage im Exsikkator über Silicagel, ohne zu evakuieren, getrocknet. Die erhaltene Probe wies einen Palladiumgehalt von 1,27 Gew.-% auf.

### 1.2.6 Imprägnierung von TiO₂/SiO₂ mit Pd(NH₃)₄(NO₃)₂ bei pH ≈ 9 (Katalysator I)

4 g TiO₂-modifizierter SiO₂-Splitt (Katalysator C) wurden 1 Stunde bei 720 K vorbehandelt. Anschließend wurde eine Lösung aus 1,07 ml Pd(NH₃)₄(NO₃)₂-Lösung (4,87% Pd) und 2,93 ml NH₃-Lösung 0,5 Gew.-% in Portionen von jeweils 1 ml zugegeben und zwischendurch das Pulver durchgerührt. Über Nacht wurde die Proben verschlossen und anschließend mehrere Tage im Exsikkator über Silicagel, ohne zu evakuieren, getrocknet. Die erhaltene Probe wies einen Palladiumgehalt von 1,20 Gew.-% auf.

### 1.3. Belegung von SiO₂ und TiO₂/SiO₂ mit anderen Palladiumverbindungen

### 1.3.1 Imprägnierung von SiO₂ mit Palladiumnitrat (Katalysator J) (Vergleichsbeispiel)

4 g SiO₂-Splitt (Katalysator A) wurden 1 Stunde bei 720 K vorbehandelt. Anschließend wurden 4 ml einer Lösung aus einem Teil Pd(NO₃)₂-Lösung (11,0 % Pd, 18 % HNO₃) und 9 Teilen Wasser in Portionen von jeweils 1 ml zugegeben und zwischendurch das Pulver durchgerührt. Über Nacht wurden die Proben verschlossen und anschließend mehrere Tage im Exsikkator über Silicagel, ohne zu evakuieren, getrocknet. Vor weiteren Untersuchungen wurde die Probe 2 Stunden bei 390 K getrocknet. Die erhaltene Probe wies einen Palladiumgehalt von 1,35 Gew.-% auf.

### 1.3.2 Imprägnierung von TiO₂/SiO₂ mit Palladiumnitrat (Katalysator K) (Vergleichsbeispiel)

4 g TiO₂-modifizierter SiO₂-Splitt (Katalysator C) wurden 1 Stunde bei 720 K vorbehandelt. Anschließend wurden 4 ml einer Lösung aus einem Teil Pd(NO₃)₂Lösung (11,0 % Pd, 18 % HNO₃) und 9 Teilen Wasser in Portionen von jeweils 1 ml zugegeben und zwischendurch das Pulver durchgerührt. Über Nacht wurden die Proben verschlossen und anschließend mehrere Tage im Exsikkator über Silicagel, ohne zu evakuieren, getrocknet. Vor weiteren Untersuchungen wurde die Probe 2 Stunden bei 390 K getrocknet. Die erhaltene Probe wies einen Palladiumgehalt von 1,3 Gew.-% auf.

### 1.3.3 Imprägnierung von SiO₂ mit Palladiumacetylacetonat (Katalysator L)

5 g SiO₂-Splitt (Katalysator A) wurden 2,5 Stunden bei 670 K im Vakuum ausgeheizt. Dem abgekühlten Träger wurde eine Lösung von 0,174 g Palladiumacetylacetonat und 50 ml THF zugegeben, die Suspension 2 Stunden unter Rückfluß gekocht und anschließend das Lösungsmittel entfernt. Nach Trocknung an Luft bei Raumtemperatur wurde die Probe weitere 2 Stunden bei 390 K an Luft getrocknet. Es wurde ein Palladiumgehalt von 1,15 Gew.-% bestimmt.

### 1.3.4 Imprägnierung von TiO₂/SiO₂ mit Palladiumacetyacetonat (Katalysator M)

5 g TiO₂-modifizierter SiO₂-Splitt (Katalysator C) wurden 2,5 Stunden bei 670 K im Vakuum ausgeheizt. Dem abgekühlten Träger wurde eine Lösung von 0,174 g Palladiumacetylacetonat und 50 ml THF zugegeben, die Suspension 2 Stunden unter Rückfluß gekocht und anschließend das Lösungsmittel entfernt. Nach Trocknung an Luft bei Raumtemperatur wurde die Probe weitere 2 Stunden bei 390 K an Luft getrocknet. Es wurde ein Palladiumgehalt von 1,05 Gew.-% bestimmt.

### 2. Katalysatorstabilität

### 2.1 Dispersionsmessung mittels CO-Pulschemisorption

Die Dispersionsmessungen erfolgten, wie bei Th. Mang beschrieben (Th. Mang, Präparation, Charakterisierung und Aktivität von PalladiumKatalysatoren mit Konzentrationsprofil, Dissertation, München, 1996), durch Pulschemisorption von CO im Wasserstoffstrom. Es werden Pulse einer bekannten Menge CO in den Wasserstoffstrom gegeben, der die Katalysatorprobe durchläuft. Mit einem Wärmeleitfähigkeitsdetektor wird die Menge an CO gemessen, die den Reaktor durchströmt, ohne (irreversibel) auf der Probe zu adsorbieren. Als Dispersion wird das Molverhältnis von aufgenommenem CO zu der in der Probe vorhandenen Menge an Palladium definiert. Dem liegt die Annahme zugrunde, daß an jedes Oberflächenpalladiumatom ein CO-Molekül gebunden wird.

Die zu messenden Proben wurden 1 Stunde in 25 ml H₂/min bei 420 K reduziert. Über die auf Raumtemperatur abgekühlten Proben wurden in einem Wasserstoffstrom von ebenfalls 25 ml/min Pulse von 75 µl CO geleitet.

Gemessene Palladiumdispersionen:

| Katalysator | Pd-Dispersion[%] (Träger SiO₂) | Katalysator | Pd-Disperion [%] (Träger TiO₂/SiO₂) |
|---|---|---|---|
| D | 47 | F | 53 |
| E | 24 | G | 51 |
| H | 34 | I | 53 |
| J | 27 | K | 25 |
| L | 16 | M | 21 |

Die Messungen zeigen eindeutig, daß die durch TiO₂-modifizierten SiO₂-Proben nach Ionenaustausch-Präparation mit einer [Pd(NH₃)₄](NO₃)₂-Lösung (Katalysatoren D/F, E/G) oder Imprägnierung (Katalysatoren H/I) mit Pd(NH₃)₄(NO₃)-Lösung hergestellten Katalysatoren eine signifikant höhere Pd-Dispersion aufweisen als die entsprechenden SiO₂-Vergleichsproben. Auch nach Imprägnierung mit Pd-acetylacetonat-Lösung (Katalysatoren L/M) liegt die erreichte Pd-Dispersion der TiO₂-modifizierten Proben signifikant höher, Bei Imprägnierung mit Pd(NO₃)₂-Lösung (Katalysatoren J/K) ist jedoch eine Verringerung der Dispersion zu beobachten.

### 2.2 Redoxzyklen

Um weitere Information über die Proben zu erhalten, wurden die Proben nach der Messung zur Simulierung eines Regenerationsvorgangs 30 min bei 720 K kalziniert und nach erneuter Reduktion im Wasserstoffstrom 1 Stunde bei 340 K wieder die Aufnahme von CO gemessen. Dieser Schritt wurde noch einmal wiederholt, so daß jede Probe insgesamt dreimal gemessen wurde. Dadurch können Aussagen über die Entwicklung der Probe gemacht werden, ohne die Absolutwerte, die die Dispersionsmessung ergibt, überzubewerten.

Gemessene Palladiumdispersionen:

| Katalysator | Pd-Dispersion [%] | | |
|---|---|---|---|
| | nach 1. Reduktion | nach 2. Reduktion | nach 3. Reduktion |
| D | 47 | 29 | 26 |
| F | 53 | 35 | 31 |
| E | 24 | 17 | 17 |
| G | 51 | 36 | 31 |
| H | 34 | 21 | 22 |
| I | 53 | 28 | 25 |
| J | 27 | 29 | 28 |
| K | 25 | 19 | 16 |
| L | 16 | 25 | 24 |
| M | 21 | . 44 | 42 |

Die Messungen zeigen eindeutig, daß die durch TiO₂-modifizierten SiO₂-Proben nach Ionenaustausch-Präparation mit [Pd(NH₃)₄](NO₃)₂-Lösung (Katalysatoren D/F, E/G) oder Imprägnierung (Katalysatoren H/I) mit Pd(NH₃)₄(NO₃)₂-Lösung hergestellten Katalysatoren auch nach mehrfacher Oxidation und Reduktion eine signifikant höhere Pd-Dispersion aufweisen. Die Stabilität der Pd-Partikel wird durch die TiO₂-Modifizierung deutlich erhöht.

Im Gegensatz dazu zeigen die mit Pd(NO₃)₂-Lösung imprägnierten Katalysatoren J/K eine niedrigere Dispersion, auch nach mehreren Redoxcyclen. Die besten Ergebnisse konnten mit TiO₂-modifizierten Systemen erzielt werden, in denen das Akitvmetall durch [Pd(NH₃)₄](NO₃)₂-Lösung aufgebracht wurde.

## Patentansprüche

1. Trägerkatalysator, enthaltend Pd und/oder Pt als katalytisch aktives Metall und einen durch Aufbringung von Modifikatoren ausgewählt aus Verbindungen des Ti, Zr, Nb und Ta in der Precursor-Form ihrer Alkoholate, Halogenide, Oxalate oder Carboxylate auf SiO₂ als inneres Trägermaterial modifizierten Träger, **dadurch gekennzeichnet, daß** das katalytisch aktive Metall in Form einer [Pd(NH₃)₄](NO₃)₂- und/oder (Pt(NH₃)₄](NO₃)₂-Lösung auf den modifizierten Träger aufgebracht wird.

2. Trägerkatalysator nach Anspruch 1, **dadurch gekennzeichnet, daß** das innere Trägermaterial vor der Aufbringung der Modifikatoren thermisch vorbehandelt wird.

3. Trägerkatalysator nach Anspruch 1 oder 2, **dadurch gekennzeichnet, daß** die Modifikatoren in Precursor-Formen ausgewählt aus Titantetraisopropylat, Titantetrachlorid, Zirconiumbromid, Zirconiumisopropoxid, Niobium-(V)-ethoxid, Niobium-(V)-isopropoxid, Nioboxalat, Niobiumammoniumoxalat, Tantalchlorid und Tantalethoxid aufgebracht werden.

4. Trägerkatalysatoren nach Anspurch 3, **dadurch gekennzeichnet, dass** die Modifikatoren in Precursor-Formen ausgewählt aus Titantetraisopropylat und Niobium-(v)-isopropoxid aufgebracht werden.

5. Verfahren zur Herstellung eines Trägerkatalysators nach einem der Ansprüche 1 bis 4, das die folgenden Schritte umfaßt:
a) thermische Vorbehandlung des SiO₂
b) Imprägnierung des thermisch vorbehandelten SiO₂ mit einem Modifikator in der Gas- oder Flüssigphase,
c) ggf. Hydrolyse des modifizierten SiO₂ zwischen 20 und 200 °C in O₂ oder an Luft oder in einem H₂O-haltigen Gasstrom,
d) ggf Trocknung zwischen 100 und 500 °C,
e) ggf. Kalzinierung zwischen 200 und 1000 °C,
f) Aufbringen des katalytisch aktiven Metalls durch Imprägnierung oder Ionenaustausch,
g) Trocknung zwischen 20 und 500 °C,
h) ggf. Kalzinierung bei bis zu 1000 °C

6. Verfahren nach Anspruch 5, **dadurch gekennzeichnet, daß** die Kalzinierung im Verfahrensschritt e) zwischen 400 und 800°C erfolgt.

7. Verwendung eines Trägerkatalysators nach einem der Ansprüche 1 bis 6 in einem Verfahren zur Hydrierung ungesättigter Verbindungen.

## Claims

1. A supported catalyst comprising Pd and/or Pt as catalytically active metal and a support modified by application of modifiers selected from among compounds of Ti, Zr, Nb and Ta in the precursor form of their alkoxides, halides, oxalates or carboxylates to SiO₂ as inner support material, wherein the catalytically active metal is applied in the form of a [Pd(NH₃)₄] (NO₃)₂- and/or [Pt(NH₃)₄] (NO₃)₂ solution to the modified support.

2. The supported catalyst according to claim 1, wherein the inner support material is pretreated thermally prior to application of the modifiers.

3. The supported catalyst according to claim 1 or 2, wherein the modifiers are applied in precursor forms selected from among titanium tetraisopropoxide, titanium tetrachloride, zirconium bromide, zirconium isopropoxide, nobium(V) ethoxide, niobium(V) isopropoxide, niobium oxalate, niobium ammonium oxalate, tantalum chloride and tantalum ethoxide.

4. The supported catalyst according to claim 3, wherein the modifiers are applied in precursor forms selected from among titanium tetraisopropoxide and niobium(V) isopropoxide.

5. A process for producing a supported catalyst according to any of claims 1 to 4, which comprises the following steps:
a) thermal pretreatment of the SiO₂,
b) impregnation of the thermally pretreated SiO₂ with a modifier in the gas or liquid phase,
c) if desired, hydrolysis of the modified SiO₂ at from 20 to 200°C in O₂ or in air or in an H₂O-containing gas stream,
d) if desired, drying at from 100 to 500°C,
e) if desired, calcination at from 200 to 1000°C,
f) application of the catalytically active metal by impregnation or ion exchange,
g) drying at from 20 to 500°C,
h) if desired, calcination at up to 1000°C.

6. The process according to claim 5, wherein the calcination in process step e) is carried out at from 400 to 800°C.

7. The use of a supported catalyst according to any of claims 1 to 6 in a process for the hydrogenation of unsaturated compounds.

## Revendications

1. Catalyseur sur support, contenant Pd et/ou Pt comme métal catalytiquement actif et un support modifié par application de modificateurs choisis parmi des composés de Ti, Zr, Nb et Ta sous la forme de précurseur de leurs alcoolates, halogénures, oxalates ou carboxylates, sur du SiO₂ comme matière de support interne, **caractérisé en ce que** le métal catalytiquement actif est appliqué sur le support modifié sous la forme d'une solution de [Pd(NH₃)₄] (NO₃)₂ et/ou de [Pt(NH₃)₄] (NO₃)₂.

2. Catalyseur sur support suivant la revendication 1, **caractérisé en ce que** la matière de support interne est prétraitée thermiquement avant l'application des modificateurs.

3. Catalyseur sur support suivant la revendication 1 ou 2, **caractérisé en ce que** les modificateurs sont appliqués sous des formes de précurseur choisies parmi du tétraisopropylate de titane, du tétrachlorure de titane, du bromure de zirconium, de l'isopropoxyde de zirconium, de l'éthoxyde de niobium-(V), de l'isopropoxyde de niobium-(V), de l'oxalate de niobium, de l'oxalate de niobium-ammonium, du chlorure de tantale et d'éthoxyde de tantale.

4. Catalyseurs sur support suivant la revendication 3, **caractérisés en ce que** les modificateurs sont appliqués sous des formes de précurseur choisies parmi du tétraisopropylate de titane et de l'isopropoxyde de niobium-(V).

5. Procédé de préparation d'un catalyseur sur support suivant l'une des revendications 1 à 4, qui comporte les étapes suivantes :
a) un prétraitement thermique du SiO₂,
b) une imprégnation du SiO₂ thermiquement prétraité par un modificateur dans la phase gazeuse ou liquide,
c) éventuellement une hydrolyse du SiO₂ modifié entre 20 et 200°C dans O₂ ou à l'air ou dans un courant gazeux contenant H₂O,
d) éventuellement un séchage entre 100 et 500°C,
e) éventuellement une calcination entre 200 et 1000°C,
f) une application du métal catalytiquement actif par imprégnation ou échange d'ions,
g) un séchage entre 20 et 500°C,
h) éventuellement une calcination à jusqu'à 1000°C.

6. Procédé suivant la revendication 5, **caractérisé en ce que** la calcination a lieu dans l'étape e) du procédé entre 400 et 800°C.

7. Utilisation d'un catalyseur sur support suivant l'une des revendications 1 à 6, dans un procédé d'hydrogénation de composés insaturés.
